# EUROPEAN PATENT APPLICATION

(11) **EP 1 055 888 A2**
(43) Date of publication of application: **29.11.2000**
(21) Application number: 00110960.2
(22) Date of filing: 26.05.2000
(51) Int. Cl.: F25B 41/06, G05D 7/00

(54) **Expansion valve**

(30) Priority: 28.05.1999 JP 15057399; 27.03.2000 JP 2000086350
(71) Applicant: Fujikoki Corporation, Tokyo 158-0082 (JP); Zexel Corporation, Tokyo 150-8360 (JP)
(72) Inventor: Nomura, Kenichi, Fujikoki Corporation, Tokyo 158-0082 (JP); Sato, Masaya, Fujikoki Corporation, Tokyo 158-0082 (JP); Arai, Yusuke, Fujikoki Corporation, Tokyo 158-0082 (JP); Kanno, Katsuhisa, Fujikoki Corporation, Tokyo 158-0082 (JP); Sakurada, Muneo, Zexel Corporation, Konan-machi, Osato-gun, Saitama 360-0193 (JP)
(74) Representative: Schrell, Andreas, Dr.

(57) **Abstract**

An expansion valve (10) which comprises; a main body (11) provided with an orifice (15) for allowing a high-pressure passageway (12) for permitting an inflow of a refrigerant to communicate with a low-pressure passageway (13) for permitting the outflow of the refrigerant; a valve member (16) for adjusting the quantity of refrigerant passing through the orifice (15); an actuating rod (44) for moving the valve member (16) in the opening direction thereof; a temperature sensitive driving element (35) for driving the actuating rod (44); and a pressing member (26) for pushing the valve member (16) in the closing direction thereof; wherein the pushing force of the pressing member (26) is made adjustable by means of an electric motor (30).

## Description

### BACKGROUND OF THE INVENTION

This invention relates to an expansion valve for use in an air conditioner of automobile for instance, and in particular to an expansion valve, which is capable of optionally selecting the opening performance thereof by rendering the loading of spring to become variable.

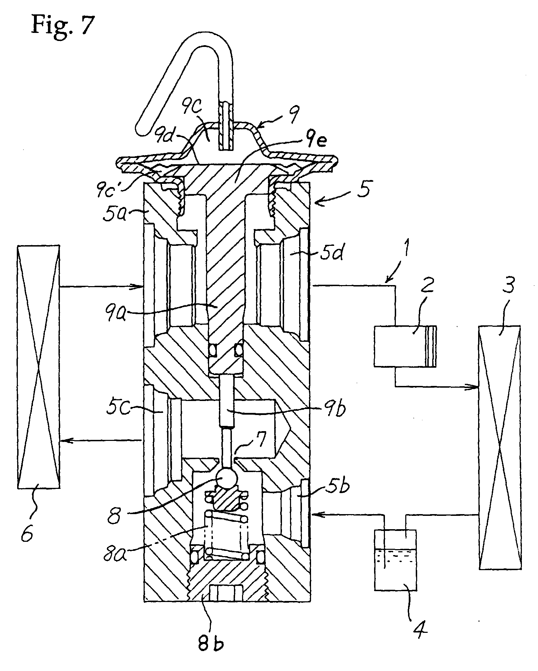

The expansion valve of kind has been conventionally employed in a refrigerating cycle 1 of an air conditioner of automobile for instance as shown in FIG. 7. Specifically, the refrigerating cycle 1 is basically constituted by a refrigerant compressor 2 to be driven by an engine, a condenser 3 connected with an outlet portion of the refrigerant compressor 2, a receiver 4 connected with the condenser 3, an expansion valve 5 for executing the adiabatic expansion of liquid phase refrigerant transferred from the receiver 4 so as to generate a vapor-liquid two-phase refrigerant, and an evaporator 6 connected with the expansion valve 5. Namely, the expansion valve 5 is disposed inside the refrigerating cycle 1.

This expansion valve 5 is provided with a high-pressure passageway 5b for enabling a liquid phase refrigerant to flow into the main body 5a, a low-pressure passageway 5c for enabling a vapor-liquid two-phase refrigerant resulted from the adiabatic expansion to flow out of the main body 5a, an orifice for allowing the high-pressure passageway 5b to communicate with the low-pressure passageway 5c, and a valve member 8 for adjusting the quantity of refrigerant passing through the orifice 7. Further, this expansion valve 5 is provided with a low pressure refrigerant passageway 5d passing through the main body 5a, and a plunger 9a slid ably disposed in the low pressure refrigerant passageway 5d and functioning as a temperature sensitive element for detecting the temperature of the refrigerant passing through the low pressure refrigerant passageway 5d, the plunger 9a being designed to be actuated by a temperature sensitive driving member 9 secured to an upper portion of the main body 5a.

The interior of the temperature sensitive driving member 9 is partitioned by means of a diaphragm 9d into an upper airtight chamber 9c and a lower airtight chamber 9c'. The upper end of the plunger 9a is formed into a disk portion 9e which is contacted with the diaphragm 9d. On the lower portion of the main body 5a, there are disposed a compression coil spring 8a which is biased to push the valve member 8 in the direction to close the valve (or valve-closing direction), and an actuating rod 9b contacted with a lower end of the plunger 9a for moving the valve member 8 in the direction to open the valve (or valve-opening direction) through the sliding movement of the plunger 9a.

The temperature inside the low pressure refrigerant passageway 5d is transmitted to the upper airtight chamber 9c by way of the plunger 9a disposed inside the temperature sensitive driving member 9, and according to the temperature thus transmitted, the pressure inside the upper airtight chamber 9c is varied. For example, when the transmitted temperature is high, the pressure inside the upper airtight chamber 9c is caused to increase so as to enable the diaphragm 9d to push down the plunger 9a. As a result, the valve member 8 is moved in the direction to open the valve, thereby allowing the refrigerant to pass through the orifice 7 in an increased quantity, thus lowering the temperature of the evaporator 6. On the other hand, when the transmitted temperature is low, the pressure inside the upper airtight chamber 9c is caused to decrease, thus weakening the pushing force of the diaphragm 9d against the plunger 9a. As a result, the valve member 8 is moved in the direction to close the valve due to the compression coil spring 8a biased to push the valve member 8 in the direction to close the valve, thereby decreasing the quantity of refrigerant passing through the orifice 7 and hence, raising the temperature of the evaporator 6.

In this manner, the expansion valve 5 is designed to vary the opening area of the orifice 7 through the movement of the valve member 8, depending on a change in temperature inside the low pressure refrigerant passageway 5d, thereby adjusting the quantity of refrigerant passing through the orifice 7, and hence, adjusting the temperature of the evaporator 6. In the expansion valve 5 of this type, the opening area of the orifice 7 for allowing the adiabatic expansion of the liquid phase refrigerant to take place so as to generate a vapor-liquid two-phase refrigerant is generally adjusted at the production phase of the expansion valve 5 by adjusting the spring loading of the compression coil spring 8a biased in the direction to close the valve 8. Once the setting of this opening area is performed concurrently with the production of the expansion valve 5, the setting of the opening area is not re-adjusted usually.

As explained above, in the expansion valve 5 of this type, the spring loading of the compression coil spring 8a is already once adjusted on the occasion of production or before the shipment of the expansion valve 5, thus setting the opening performance of the expansion valve 5. However, it is recently demanded that the opening performance of the expansion valve 5 should be made variable so as to enable the temperature of the evaporator 6 to be optionally shifted to a high temperature side or a low temperature side, thereby optimizing the operation of the air conditioner. Therefore, it is required now to take any suitable means which enables even a user to optionally re-adjust the opening performance of the expansion valve 5 of each air conditioner, in addition to the adjustment of the expansion valve 5 on the occasion of production or shipment thereof.

In view of the fact that the spring constant of the compression coil spring 8a differs from one another depending on the individual performance of the compression coil spring 8a, the means for enabling to optionally readjust the opening performance of the expansion valve 5 should preferably be designed such that the characteristic value of the opening performance that has been re-adjusted can be retained as a reference value. If the expansion valve 5 is designed in this manner, even when the power source of the air conditioner is turned off, the characteristic value of the opening performance that has been set before the power source is turned off can be utilized as a reference value. As a result, it would become possible to realize an optimum operation of the air conditioner. However, the prior art has failed to give any particular consideration to such features as mentioned above.

### BRIEF SUMMARY OF THE INVENTION

The present invention has been made under the circumstances as mentioned above, and therefore, an object of the present invention is to provide an expansion valve wherein the adjustment of the pushing force of a pressing member for pushing a valve member in the direction to close the valve for adjusting the quantity of refrigerant passing through an orifice is effected by making use of an electric motor, thereby enabling it to realize a reliable adjustment of the opening area for allowing the adiabatic expansion of the liquid phase refrigerant in the expansion valve to take place so as to generate a vapor-liquid two-phase refrigerant and also enabling it to retain the value of the opening area thus adjusted.

With a view to achieve the above object, this invention provides an expansion valve which comprises; a main body provided with an orifice for allowing a high-pressure passageway for permitting an inflow of a refrigerant to communicate with a low-pressure passageway for permitting the outflow of the refrigerant; a valve member for adjusting the quantity of refrigerant passing through the orifice; an actuating rod for moving the valve member in the opening direction thereof; a temperature sensitive driving element for driving the actuating rod; and a pressing member for pushing the valve member in the closing direction thereof; wherein the pushing force of the pressing member is made adjustable by means of an electric motor.

According to the expansion valve of the present invention, the pushing force of the pressing member for pushing the valve member in the closing direction thereof is enabled to change through the rotation of the motor and in balance with the sliding movement, in the opening direction of the valve member, of the actuating rod which is to be effected by the temperature sensitive driving member. As a result, it is now possible to suitably adjust the opening area of the orifice so as to reliably change the opening area to any optional value, thereby enabling the adiabatic expansion of the liquid phase refrigerant to take place to generate a vapor-liquid two-phase refrigerant.

In a preferred embodiment of the expansion valve according to the present invention, said main body is further provided with an additional low-temperature passageway which is exposed to a temperature sensitive element for detecting and transmitting a temperature of said additional low-temperature passageway to said temperature sensitive driving element, the pressing member is constituted by a compression coil spring, the pushing force by the compression coil spring is enabled to be adjusted by making use of an adjusting mechanism which is capable of changing the length of the compression coil spring, which is to be operated by means of the electric motor, and the adjusting mechanism is constituted by a screw mechanism which is designed to convert the rotation of the electric motor into a rectilinear movement.

Further, when the pressing member is constituted by a compression coil spring, and the pushing force of the compression coil spring is enabled to be adjusted by making use of a spring shoe which is made movable by a screw mechanism which is capable of converting the rotation of the electric motor into a rectilinear movement, the space efficiency can be improved, thus making it possible to miniaturize the expansion valve.

In another preferred embodiment of the expansion valve according to the present invention, the electric motor is fixed through a motor-mounting member to the main body, and the motor-mounting member is screwed on (or engaged with) the main body. In this case, the screwed position of the motor-mounting member to the main body is retained by means of a screw position-locking member which is attached to the motor-mounting member. The electric motor is provided with a motor position-adjusting member, which is engaged with the motor-mounting member, and the screwed position of the motor position-adjusting member is retained by a motor position-locking member attached to the motor-mounting member. The electric motor is fixed to the motor-mounting member through a motor-fixing member which is adapted to be engaged with the motor-mounting member.

### BRIEF DESCRIPTION OF THE SEVERAL VIEWS OF THE DRAWING

FIG. 1 is a cross-sectional view of an expansion valve according to a first embodiment of the present invention, as it is employed in a refrigerating cycle;
FIG. 2 is an enlarged cross-sectional view of a main portion of FIG. 1;
FIG. 3 is a cross-sectional view of an expansion valve according to a second embodiment of the present invention, as it is employed in a refrigerating cycle;
FIG. 4 is an enlarged cross-sectional view of a main portion of FIG. 3;
FIG. 5 is a cross-sectional view of an expansion valve according to a third embodiment of the present invention;
FIG. 6a is a cross-sectional view of an expansion valve according to a fourth embodiment of the present invention,
and FIG. 6b is a partially enlarged front view of the expansion valve; and
FIG. 7 is a cross-sectional view of an expansion valve according to the prior art, as it is employed in a refrigerating cycle.

### DETAILED DESCRIPTION OF THE INVENTION

The first embodiment of the expansion valve according to the present invention will be explained with reference to the drawings.

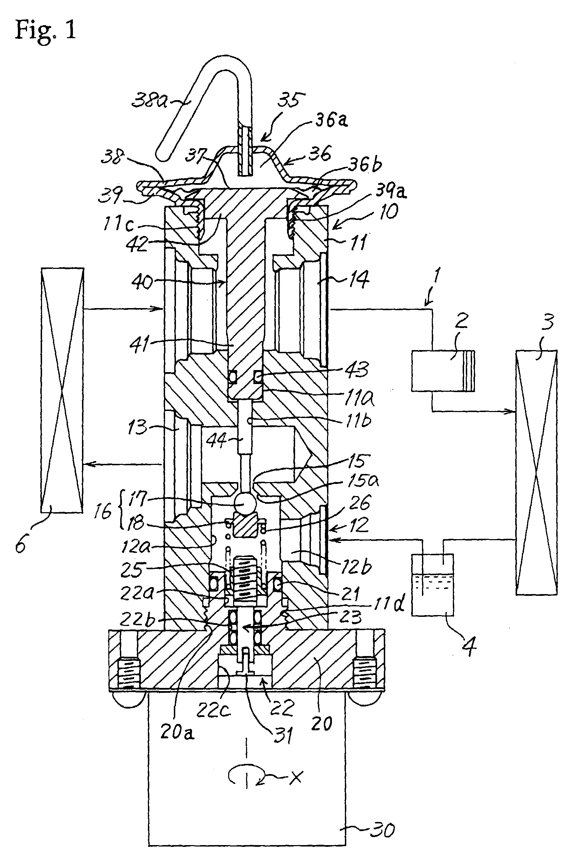

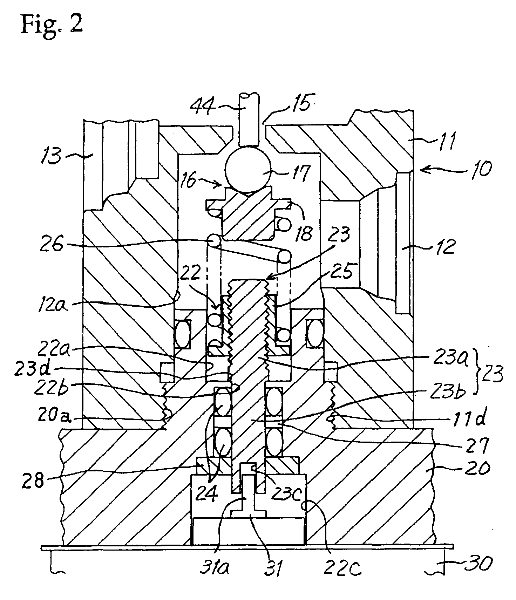

FIG. 1 is a cross-sectional view of an expansion valve according to a first embodiment of the present invention, as it is employed in a refrigerating cycle, and FIG. 2 is an enlarged cross-sectional view of a main portion of FIG. 1. Referring to these FIGS., the expansion valve 10 is adapted to be employed in a refrigerating cycle 1 of an air conditioner of automobile for instance. Specifically, the refrigerating cycle 1 basically constituted by a refrigerant compressor 2 to be driven by an engine, a condenser 3 connected to an outlet portion of the refrigerant compressor 2, a receiver 4 connected to the condenser 3, an expansion valve 10 for executing the adiabatic expansion by diminishing the liquid phase refrigerant transferred from the receiver 4 at the orifice of a predetermined area so as to generate a vapor-liquid two-phase refrigerant, and an evaporator 6 connected with the expansion valve 10, wherein a vapor phase refrigerant is circulated from the evaporator 6 to the refrigerant compressor 2.

The expansion valve 10 is constituted by a main body 11 formed of a metallic (aluminum) rectangular configuration, a temperature sensitive driving member 35 fixed to an upper portion of the main body 11, a motor-mounting member 20 screwed to a lower portion of the main body 11, and a pulse motor 30 fixed to the underside of the motor-mounting member 20.

The main body 11 is provided at a lower portion thereof with a high-pressure passageway 12 connected with the receiver 4 so as to allow the inflow of the liquid phase refrigerant, and with a low-pressure passageway 13 for allowing the vapor-liquid two-phase refrigerant to outflow toward the evaporator 6. The high-pressure passageway 12 is disposed in such a manner as to penetrate through one side wall of the main body 11 and to communicate via an opening 12b with a bottom hole 12a formed in the bottom of the main body 11. The bottom hole 12a constitutes a valve chamber housing a valve member 16 and a compression coil spring 26 for pushing the valve member 16 in the valve-closing direction. The low-pressure passageway 13 is disposed over the high-pressure passageway 12 and in a manner to penetrate through the opposite side wall of the main body 11. The main body 11 is also provided at an upper portion thereof with a low pressure refrigerant passageway 14 which is disposed in a manner to diametrally penetrate through the side wall of the main body 11 and to permit the evaporator 6 to communicate with the refrigerant compressor 2.

The main body 11 is provided at the inner central portion thereof with an orifice 15 for communicating the high-pressure passageway 12 with the low-pressure passageway 13. The orifice 15 is constituted by a circular hole of small diameter having a cone-shaped valve seat 15a on the bottom hole 12a side thereof, which has been formed by means of countersinking work. The valve member 16 for adjusting the quantity of the refrigerant passing through the orifice 15 is constituted by a spherical valve element 17 which is designed to be seated on the valve seat 15a for opening and closing the orifice 15, and a receiver element 18 fixed to the valve element 17 by means of weld, etc.

The lower opening portion of the high-pressure passageway 12 is provided on the inner wall thereof with an internal thread 11d for engaging with a screw portion 20a of the central protrusion formed on the motor-mounting member 20 so as to close the lower opening portion of the high-pressure passageway 12. Further, an O-ring 21 is interposed between the main body 11 and the motor-mounting member 20. This motor-mounting member 20 is provided therein with an axial through-hole 22 having an upper large bore size portion 22a, an intermediate small bore size portion 22b and a lower large bore size portion 22c. An adjusting shaft 23 constituting one element of the adjustment mechanism is movably disposed in this axial through-hole 22.

This adjusting shaft 23 is composed of an upper large screw portion 23a and a lower small shaft portion 23b, the lower portion of which is formed into a slotted engaging groove 23c. Between the intermediate small bore size portion 22b of the motor-mounting member 20 and the lower small shaft portion 23b of the adjusting shaft 23 is duplicatively interposed an O-ring 24, thereby enhancing the air tightness of this portion. These O-rings 24 are prevented from falling therefrom by making use of a retaining ring 27 and a press-fit washer 28. The upper large screw portion 23a of the adjusting shaft 23 is engaged with a spring shoe 25 constituting one element of the adjusting mechanism and having a hexagonal external configuration for preventing the rotation thereof. Namely, by this engagement between the spring shoe 25 and the upper large screw portion 23a of the adjusting shaft 23, a screw mechanism for converting the rotation of motor to a rectilinear movement is constituted. By the way, the outer diameter of the lower end portion of the spring shoe 25 is made smaller than the inner diameter of the upper large bore size portion 22a of the motor-mounting member 20.

A step portion 23d formed at the boundary between the upper large screw portion 23a and the lower small shaft portion 23b of the adjusting shaft 23 is designed so as to be contacted with the top surface of the intermediate small bore size portion 22b of the motor-mounting member 20, thereby preventing the adjusting shaft 23 from moving downward therefrom. A compression coil spring 26 constituting a pressing member is interposed between the spring shoe 25 and the receiver element 18 of the valve member 16 in a manner to push the valve member 16 toward the orifice 15, i.e. in the valve-closing direction.

A pulse motor 30 for adjusting the pushing force of the compression coil spring 26 is fixed to the bottom surface of the motor-mounting member 20, and the output shaft 31 of the pulse motor 30 is provided with an engaging member 31a which is adapted to be inserted into the engaging groove 23c formed at the lower end of the adjusting shaft 23. Thus, the torque of the output shaft 31 of pulse motor 30 is transmitted to the adjusting shaft 23 to cause the adjusting shaft 23 to rotate. As a result, instead of being rotated, the spring shoe 25 is enabled, via the upper large screw portion 23a, to rectilinearly move up and down, thereby making it possible to adjust the length of the compression coil spring 26 and hence, to adjust the pushing force of the compression coil spring 26.

According to this embodiment, the pulse motor 30 is employed. This pulse motor 30 is designed to be controlled by a controller (not shown) having a motor driver, and this controller is designed to receive an output signal from a temperature sensor (not shown) attached to the evaporator 6 for instance. However, the motor useful in the present invention would not be limited this pulse motor, but may be a servo-motor for example. Further, the output shaft may not be directly connected with the motor, but may be connected via a decelerating mechanism so as to decelerate the rotation of the output shaft.

The temperature sensitive driving member 35 fixed to the upper portion of the main body 11 is constituted by a temperature sensitive portion 36 positioned at an upper portion of the temperature sensitive driving member 35 and a plunger 40 positioned below the temperature sensitive portion 36. The temperature sensitive portion 36 is provided with an upper air-tight chamber 36a and a lower air-tight chamber 36b, which are partitioned by a diaphragm 37 made of a metallic (stainless steel for instance) thin sheet and defined by an upper cover 38 fusion-bonded to the top peripheral surface of the diaphragm 37 and by a lower cover 39 fusion-bonded to the back peripheral surface of the diaphragm 37, respectively. Meanwhile, the plunger 40 is constituted by a cylindrical portion 41 and a disk portion 42 formed contiguous with the upper portion of the cylindrical portion 41, wherein the disk portion 42 is contacted with the back surface of the diaphragm 37 and enabled to move up and down. The plunger 40 is disposed slid ably in a central bore 11a formed orthogonal to the low pressure refrigerant passageway 14 and is provided at a lower portion thereof with an O-ring 43 for ensuring air-tightness thereof with respect to the central bore 11a.

The upper air-tight chamber 36a formed between the diaphragm 37 and the upper cover 38 of the temperature sensitive driving member 35 is filled with a refrigerant, and a refrigerant tube 38a for filling a refrigerant and attached to an upper portion of the upper cover 38 is sealed at a proximal end thereof after finishing the filling of a refrigerant. The lower end portion of the lower cover 39 is kept opened, and the disk portion 42 of the plunger 40 is enabled to move up and down. In this case, the enlarged flange portion formed at the top of the disk portion 42 is designed so as to be retained inside the lower air-tight chamber 36b to thereby prevent the plunger 40 from falling from the temperature sensitive portion 36. On the outer wall of the opening portion formed at the lower end of the lower cover 39, there is formed an attaching screw 39a, with which a female screw 11c formed on the upper portion of the main body 11 is engaged so as to secure the temperature sensitive driving member 35 to the main body 11.

The main body 11 is provided with a through-hole 11b for allowing the central bore 11a to communicate with the low-pressure passageway 13, the through-hole 11b being formed coaxial with the axial line of the orifice 15. Further, an actuating rod 44 is slid ably inserted in the through-hole 11b, and the upper end of the actuating rod 44 is contacted with the lower end of the plunger 40, while the lower end of the actuating rod 44 is contacted with the spherical valve 17 of the valve member 16. As a result, as the plunger 40 is moved up and down, the actuating rod 44 is caused to concurrently moved up and down, thereby moving the valve member 16 up and down so as to vary the opening area of the orifice 15, thus adjusting the quantity of refrigerant passing through the orifice 15. By the way, FIG. 1 illustrates a state wherein the plunger 40 is descended, thereby causing the actuating rod 44 to interlockingly move downward, thus showing a state wherein the opening area of the orifice 15 is made maximum.

Then, as mentioned above, this expansion valve is constructed such that the opening area of the orifice 15 for allowing the passage of refrigerant can be varied by the rotation of the pulse motor 30, which causes the adjustment of the pushing force in the upward direction (valve-closing direction) of the compression coil spring 26 in balance with the sliding movement in the downward direction (valve-opening direction) of the actuating rod 44 which is interlocked with the plunger 40 of the temperature sensitive driving member 35.

Next, the operation of the expansion valve 10 constructed as mentioned above will be explained.

In the refrigerating cycle 1, a high pressure refrigerant that has been compressed by the refrigerant compressor 2 to be driven by an engine is discharged into the condenser 3, in which the high pressure refrigerant is subjected to heat radiation and condensation, thus forming a liquid phase refrigerant which is then stored in the receiver 4. Then, the liquid phase refrigerant is discharged from the receiver 4 and fed to the high-pressure passageway 12 of the expansion valve 10. The liquid phase refrigerant in the expansion valve 10 is subjected to the adiabatic expansion thereof, thus forming a vapor-liquid two-phase refrigerant, which is then fed via the low-pressure passageway 13 to the evaporator 6. The vapor-liquid two-phase refrigerant is then evaporated in the evaporator 6, thus forming a vapor phase refrigerant, thus turning the evaporator 6 into a low temperature condition. The vapor phase refrigerant in the evaporator 6 is allowed to pass through the low-pressure passageway 14 and to return to the refrigerant compressor 2, thereby allowing the refrigerant to circulate within the refrigerating cycle 1.

In the refrigerating cycle 1 as mentioned above, the expansion valve 10 functions such that the temperature of refrigerant inside the low pressure refrigerant passageway 14 is transmitted to the upper airtight chamber 36a of the temperature sensitive portion 36 by way of the plunger 40 disposed inside the temperature sensitive driving member 35, and when this temperature is high, the pressure inside the upper airtight chamber 36a is increased, thereby actuating the diaphragm 37 to move the plunger 40 and the actuating rod 44 downward, thus pushing the valve member 16 downward. As a result, the opening area of the orifice 15 is enlarged to thereby increase the quantity of refrigerant passing through the orifice 15. On the other hand, when the transmitted temperature is low, the pressure inside the upper airtight chamber 36a is caused to decrease, thus allowing the valve member 16 to be pushed up in the valve-closing direction by the effect of the compression coil spring 26. As a result, the opening area of the orifice 15 is minimized to thereby decrease the quantity of refrigerant passing through the orifice 15.

In this manner, the opening area of the orifice 15 for allowing the adiabatic expansion of the liquid phase refrigerant to take place so as to generate a vapor-liquid two-phase refrigerant is determined by the balance between the movement in the downward direction (valve-opening direction) of the plunger 40 of the temperature sensitive driving member 35 and the pushing force in the upward direction (valve-closing direction) of the compression coil spring 26.

In the state where the opening area of the orifice 15 is automatically controlled as explained above, if the temperature of the evaporator S is to be adjusted to a high temperature side or a low temperature side, the adjustment is performed through the rotation of the pulse motor 30. For example, when the pulse motor 30 is normally rotated in the direction of X as shown in FIG. 1, the engaging member 31a of the output shaft 31 is caused to rotate, thereby enabling the adjusting shaft 23 to normally rotate. As a result, the spring shoe 25 engaging with the adjusting shaft 23 is moved downward, resulting in an increase in length of the compression coil spring 26, thus weakening the pushing force of the compression coil spring 26. When the pushing force of the compression coil spring 26 is adjusted to be weakened, the load against the downward movement of the plunger 40 of the temperature sensitive driving member 35 is lowered. As a result, the opening area of the orifice 15 tends to be increased, thus increasing the quantity of refrigerant passing through the orifice 15, thereby making it possible to adjust the temperature of the evaporator 6 to a lower temperature side.

On the other hand, when the pulse motor 30 is rotated in the direction opposite to the direction of X, the rotating direction of the engaging member 31a of the output shaft 31 is caused to reverse, thereby causing the adjusting shaft 23 to reversely rotate. As a result, the spring shoe 25 engaging with the adjusting shaft 23 is moved upward, resulting in an decrease in length of the compression coil spring 26, thus strengthening the pushing force of the compression coil spring 26. When the pushing force of the compression coil spring 26 is adjusted to be strengthened, the resistive force against the downward movement of the plunger 40 of the temperature sensitive driving member 35 is increased. As a result, the opening area of the orifice 15 tends to be decreased, thus minimizing the quantity of refrigerant passing through the orifice 15, thereby making it possible to adjust the temperature of the evaporator 6 to a higher temperature side.

Therefore, it is now possible according the expansion valve 10 of this embodiment to suitably adjust the temperature of the evaporator 6, if so demanded, by the actuation of pulse motor which enables to adjust the pushing force of the compression coil spring 26 so as to vary the quantity of refrigerant passing through the orifice 15. Furthermore, since the pulse motor 30 is capable of accurately controlling the rotation thereof by way of pulse, the relative quantity of refrigerant passing through the orifice 15 can be precisely adjusted. Moreover, since the adjustment of the pushing force of the compression coil spring 26 is performed by a screw mechanism between the adjusting shaft 23 and the spring shoe 25 both disposed inside the motor-mounting member 20, the space efficiency can be improved, thus making it possible to miniaturize the expansion valve 10.

The second embodiment of the expansion valve according to the present invention will be explained with reference to the drawings.

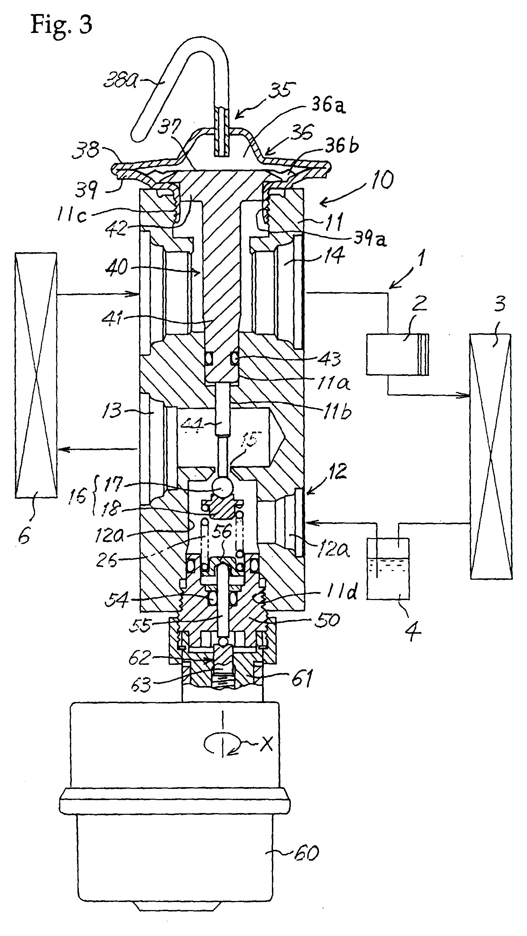

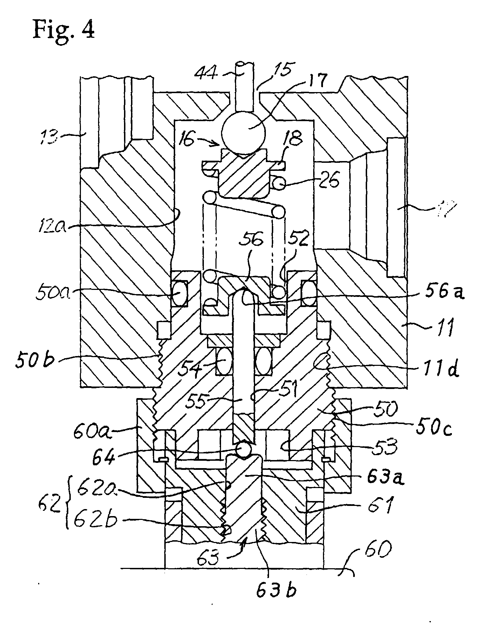

FIG. 3 is a cross-sectional view of an expansion valve according to a second embodiment of the present invention, as it is employed in a refrigerating cycle, and FIG. 4 is an enlarged cross-sectional view of a main portion of FIG. 3. This second embodiment is substantially the same as the aforementioned first embodiment except that the adjusting mechanism for adjusting the pushing force of the compression coil spring constituting a pressing member for pushing the valve member in the valve-closing direction is modified as explained below in detail, so that the same members or parts which are the same as those of the first embodiment will be identified by the same reference numerals, thereby omitting the detailed explanation thereof.

The expansion valve 10 is constituted by a main body 11 formed of a metallic (aluminum) rectangular configuration, a temperature sensitive driving member 35 fixed to an upper portion of the main body 11, a motor-mounting member 50 screwed to a lower portion of the main body 11, and a pulse motor 60 fixed to the underside of the motor-mounting member 50.

The opening portion 12a of the high-pressure passageway 12 is provided on the inner wall thereof with an internal thread 11d engaging with an external screw portion 50b of the cylindrical motor-mounting member 50 which is designed to close the lower opening portion of the opening portion 12a. At the same time, an O-ring 50a is interposed between the inner wall of the opening portion 12a and the cylindrical motor-mounting member 50 so as to ensure an air-tightness of this engaged portion. This motor-mounting member 50 is constituted by an upper half portion and a lower half portion having a larger diameter than that of the upper half portion. Specifically, the upper half portion is inserted into the main body 11 through the external screw portion 50b, while the lower half portion is protruded out of the main body 12. and provided with an external screw portion 50c, on which the pulse motor 60 is mounted via a nut 60a.

The motor-mounting member 50 is provided at the axial center thereof with a through-hole 51 and an enlarge hole 52 forming an open top. The motor-mounting member 50 is also provided at the underside thereof with a hexagonal hole 53 for allowing a hexagon wrench (not shown) to be inserted therein, thereby enabling the motor-mounting member 50 to be attached to the main body 11.

An adjusting shaft 55 is slid ably fitted in the axial through-hole 51 with an O-ring 54 being interposed therebetween, thereby allowing the adjusting shaft 55 to move up and down. A cap-shaped spring shoe 56 which is placed in the enlarge hole 52 is attached to the top of the adjusting shaft 55 in such a manner that a conical hole 56a facing downward and formed in the cap-shaped spring shoe 56 is coaxially contacted with the top of the adjusting shaft 55. A compression coil spring 26 is interposed between the spring shoe 56 and the receiver element 18 of the valve member 16 in a manner to push the valve member 17 in the valve-closing direction.

The pulse motor 60 is provided, as one component of the adjusting mechanism, with a mounting shaft 61 which is protruded upward and engaged with the motor-mounting member 50. This mounting shaft 61 is provided at the axial center thereof with an axial hole 62 consisting of an axial bore portion 62a and a tapped bore portion 62b. A driving shaft 63 constituting one component of the adjusting mechanism is interlocked with the output shaft of the pulse motor 60 and is composed of an upper shaft portion 63a and a lower driving thread portion 63b. The upper shaft portion 63a is inserted into the axial bore portion 62a of the axial hole 62, while the lower driving thread portion 63b is engaged with the tapped bore portion 62b, thereby constituting a screw mechanism. When the output shaft of the pulse motor 60 is rotated, the driving shaft 63 is caused to move in the elevational direction through the driving thread portion 63b, thereby causing the adjusting shaft 55 to move upward or downward through a spherical driving member 64 which is fusion-bonded to the top of the driving shaft 63. Though not illustrated in these FIGS., the output shaft and driving shaft 63 of the pulse motor 60 may be constructed in the same manner as the combination of the engaging member 31a and the engaging groove 23c as set forth in the aforementioned first embodiment.

According to the expansion valve 10 of this second embodiment which is constructed as explained above, when the output shaft of the pulse motor 60 is rotated, the driving shaft 63 is caused to interlockingly rotate and to move in the elevational direction through the driving thread portion 63b, thereby causing the adjusting shaft 55 to move upward or downward through a spherical driving member 64. As a result, the cap-shaped spring shoe 56 is caused to move up-or downward within the enlarge hole 52, thereby expanding or shrinking the length of the compression coil spring 26, thus adjusting the pushing force of the compression coil spring 26.

When the pulse motor 60 is normally rotated in the direction of X as shown in FIG. 3, the driving shaft 63 is caused to move upward, thereby enabling the spring shoe 56 to be moved upward by the adjusting shaft 55, thus increasing the pushing force of the compression coil spring 26. As a result, the pushing force of the compression coil spring 26 to move the valve member 16 in the valve-closing direction is increased, thus decreasing the opening area of the orifice 15, thereby making it possible to adjust the evaporator 6 to a higher temperature side.

On the other hand, when the pulse motor 60 is rotated in the direction opposite to the direction of X, the pushing force of the compression coil spring 26 is weakened, thereby weakening the force to move the valve member 16 in the valve-closing direction. As a result, the resistive force against the downward movement of the plunger 40 of the temperature sensitive driving member 35 is weakened. As a result, the opening area of the orifice 15 is increased, thereby making it possible to adjust the evaporator 6 to a lower temperature side.

Therefore, it is now possible according the expansion valve 10 of this embodiment to suitably adjust the temperature of the evaporator 6 by the actuation of pulse motor 60 which moves the adjusting shaft 55 in the elevational direction thereby to vary the length of the compression coil spring 26 and adjust the pushing force of the compression coil spring 26 so as to adjust the opening area of the orifice 15. Furthermore, since the opening area of the orifice 15 is made adjustable by the way of pulse by the pulse motor 60, it can be precisely adjusted.

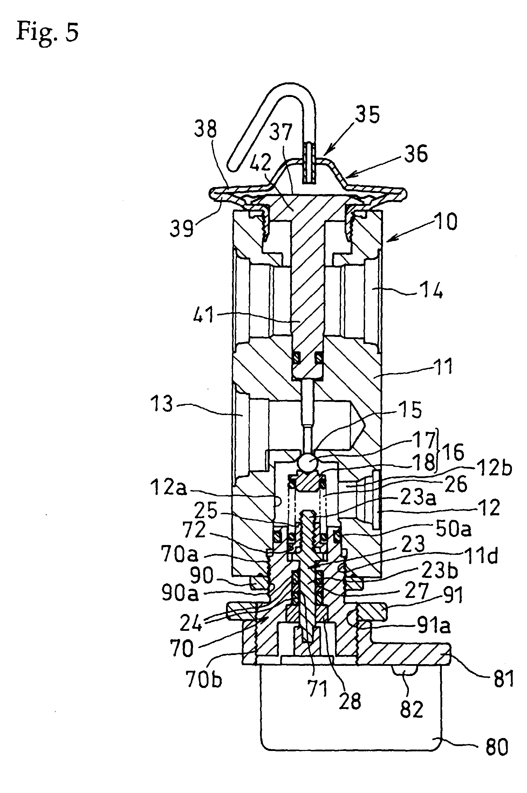

FIG. 5 shows a cross-sectional view of an expansion valve according to a third embodiment of the present invention.

The expansion valves according to the first and second embodiments are featured in that the value of the opening area of the orifice 15 is suitably adjusted by the rotation of pulse motor 30 or 60, which enables to alter the length of the compression coil spring 26 through the aforementioned adjusting mechanism. Whereas the expansion valve 10 according to this embodiment is featured in that the valve opening performance that has been suitably changed in every individual air conditioner can be more flexibly adjusted, and at the same time, the value that has been adjusted can be retained as a reference value, and that the limitation with respect to the position of cords of the motor 80 is suitably treated, thereby making it possible to suitably retain the position of cords of the motor 80. The modified features of this embodiment will be explained below in more detail, and the same members or parts which are the same as those of the first and second embodiments will be identified by the same reference numerals, thereby omitting the detailed explanation thereof.

The expansion valve 10 is constituted by a main body 11 formed of a rectangular configuration, a temperature sensitive driving member 35 fixed to an upper portion of the main body 11, a motor-mounting member 70 screwed adjustably to a lower portion of the main body 11, and a pulse motor 80 fixed to the underside of the motor-mounting member 70.

The main body 11 is provided at a lower portion thereof with a high-pressure passageway 12, and with a low-pressure passageway 13. The high-pressure passageway 12 is disposed in such a manner as to communicate via an opening 12b with a bottom hole 12a formed in the bottom of the main body 11. The bottom hole 12a constitutes a valve chamber housing a valve member 16 and a compression coil spring 26 for pushing the valve member 16 in the valve-closing direction.

The high-pressure passageway 12 in this main body 11 is provided, on the inner wall of the bottom hole 12a thereof, with an internal thread 11d which is engaged with the external thread portion 70a of the motor-mounting member 70 having a stepped cylindrical configuration so as to close the bottom hole 12a. Further, an O-ring 50a is interposed between the main body 11 and the motor-mounting member 70 so as to ensure the air-tightness of this portion. This motor-mounting member 70 functions, together with a motor 80, to adjust the pushing force of the compression coil spring 26 and is provided with an upper portion, an intermediate portion and a lower portion, the diameters of these portions being gradually enlarged in the mentioned order. The aforementioned upper portion is disposed inside the main body 11, the intermediate portion is consisted of a portion which is disposed inside the main body 11 through the external thread portion 70a and a portion which is protruded out of the main body 11. This external thread portion 70a is also engaged with the internal thread portion 90a of an engaged position-locking member 90. On the other hand, the lower portion is protruded out of the main body 11, and the external thread portion 70b thereof is engaged not only with a motor position-adjusting member 81 which is fixed via a screw 82 to the pulse motor 80, but also with the internal thread portion 91a of a motor position-locking member 91.

The motor-mounting member 70 is provided at the axial center thereof with a through-hole 71 and an enlarge hole 72 forming an open top. An adjusting shaft 23 is slid ably fitted in the through-hole 71 with a couple of O-rings 24 being interposed therebetween, thereby allowing the adjusting shaft 23 to move up and down.

This adjusting shaft 23 is composed of an upper large screw portion 23a and a lower small shaft portion 23b. The upper large screw portion 23a of the adjusting shaft 23 is engaged with a spring shoe 25. Namely, by this engagement between the spring shoe 25 and the upper large screw portion 23a of the adjusting shaft 23, a screw mechanism for converting the rotation of motor to a rectilinear movement is constituted. A compression coil spring 26 constituting a pressing member is interposed between the spring shoe 25 and the receiver element 18 of the valve member 16 in a manner to push the valve member 16 toward the orifice 15, i.e. in the valve-closing direction.

The engaged position-locking member 90 which is engaged with the external thread portion 70a is designed to retain as a reference value the pushing force of the compression coil spring 26 which is to be effected through the engagement between the main body 11 and the motor-mounting member 70. In the embodiment, the engaged position-locking member 90 is represented by a hexagonal locking nut. On the other hand, the motor position-locking member 91 which is engaged with the external thread portion 70b is designed to retain as a reference position the mounted position of the motor 80. In the embodiment, the motor position-locking member 91 is represented by a hexagonal locking nut. These locking nuts 90 and 91 may not be confined to this hexagonal locking nut, but may be formed of a screw which is capable of fixedly retaining the position between the main body 11 and the motor-mounting member 70 as well as the position between the motor-mounting member 70 and the pulse motor 80.

The procedure for retaining the value of opening area of the orifice 15 as a determined reference value by making use of the engaged position-locking member 90 as well as the procedure for retaining the mounted position of the motor 80 by making use of the motor position-locking member 91 can be performed as follows.

First of all, the motor position-locking member 91 is fitted from the top of motor-mounting member 70 and engaged with the external thread portion 70b of motor-mounting member 70. Then, the engaged position-locking member 90 is fitted from the top of motor-mounting member 70 so as to be engaged with the external thread portion 70a of motor-mounting member 70, and, through this engagement with the external thread portion 70a, moved toward the pulse motor 80. The pulse motor 80 is secured through the motor position-adjusting member 81 to the underside of the motor-mounting member 70.

The motor-mounting member 70 which is provided with the engaged position-locking member 90, the motor position-locking member 91, the motor 80, etc. is fixed to the underside of the main body 11 through an engagement between the external thread portion 70a and the internal thread 11d. Thereafter, a pulse is transmitted to the pulse motor 80 so as to move the spring shoe 25 and determine a reference value of the opening area of the orifice 15, thereby adjusting the pushing force of the compression coil spring 26.

Once this reference value is determined, the engaged position-locking member 90 which has been engaged in advance with the external thread portion 70a of motor-mounting member 70 is allowed to move along the external thread portion 70a of motor-mounting member 70 until the top surface of the engaged position-locking member 90 is impinged against the main body 11. When the movement of the engaged position-locking member 90 is stopped due to the impingement thereof against the main body 11, the reference value of the opening area of the orifice 15 is kept retained.

As a result, even if an electric power source of the air conditioner is turned off, the performance value utilized before the power source is turned off can be re-utilized as a reference value. As a result, it is possible to obviate any influence from the non-uniformity in spring constant of the compression coil spring 26, thereby making it possible to realize an optimum operation of air conditioner. By the way, it is possible to repeat the re-setting of the reference value that has been once set by releasing the contact between the engaged position-locking member 90 and the main body 11 so as to change the position of the motor-mounting member 70 in relative to the main body 11, and then, by re-contacting the engaged position-locking member 90 to the main body 11.

After the expansion valve 10 is incorporated into the refrigeration cycle 1, the orientation of the motor 80 is at first adjusted to a reference position by taking the position of cords of motor 80 into consideration through an engagement between the motor position-adjusting member 81 and the motor-mounting member 70, and then, the motor position-locking member 91 engaging with the external thread portion 70b of motor-mounting member 70 is moved along the external thread portion 70b until the underside of the motor position-locking member 91 is contacted with the motor position-adjusting member 81. As a result, the motor position-locking member 91 is contacted with the pulse motor 80 and hence, is stopped moving, thus making it possible to retain the reference position of the pulse motor 80.

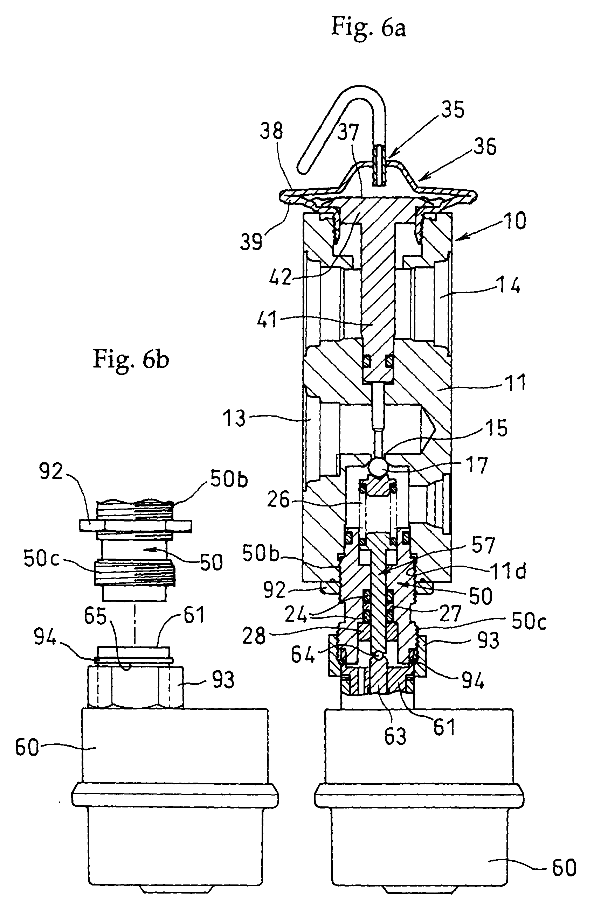

Further, as for the adjustment of the opening area of the orifice 15, the retention of the reference value and the fixing of the reference position of the motor, they may be constructed as seen in the expansion valve 10 according to the fourth embodiment shown in FIG. 6. In this case, first of all, the motor-fixing member 93 is inserted over the mounting shaft 61 constituting one component of the adjusting mechanism and protruded from the upper portion of the pulse motor 60. Thereafter, a C-ring 94 having a square cross-section is engaged with the upper groove 65 of the mounting shaft 61, thereby determining the upper limit of the moving distance of the motor-fixing member 93 (FIG. 6b). Then, the engaged position-locking member 92 is fitted from the top of the external thread portion 50b of motor-mounting member 50 so as to be engaged with the external thread portion 50b, and moved toward the pulse motor 60.

Thereafter, the motor-fixing member 93 carrying the mounting shaft 61 and the motor 60 is engaged with the external thread portion 50c formed at a lower portion of motor-mounting member 50, and moved along the external thread portion 50c until the motor-fixing member 93 is stopped rotating due to the engagement of the inner wall thereof with the C-ring 94, thereby fixing the reference position of the motor 60.

Then, the motor-mounting member 50 which is provided with the engaged position-locking member 92, the motor-fixing member 93, the pulse motor 60, etc. is fixed to the underside of the main body 11 through an engagement between the external thread portion 50b and the internal thread 11d. Thereafter, a pulse is transmitted to the pulse motor 60 so as to adjust a reference value of the opening area of the orifice 15.

Then, the engaged position-locking member 92 which has been engaged in advance with the external thread portion 50b of motor-mounting member 50 is allowed to move along the external thread portion 50b of motor-mounting member 50 until the top surface of the engaged position-locking member 92 is impinged against the main body 11. When the movement of the engaged position-locking member 92 is stopped due to the impingement thereof against the main body 11, the reference value of the opening area of the orifice 15 is kept retained.

As seen from the above explanation, it is possible according to the expansion valve of the present invention to optionally adjust the valve-opening performance by making use of an electric motor, which enables to adjust the pushing force of a pressing member pushing a valve member in the valve-closing direction. Furthermore, this adjusting mechanism is capable of improving the space efficiency, thus making it possible to miniaturize the expansion valve.

Additionally, since a locking member for enabling the optionally adjusted valve-opening performance to be kept retained is employed, it is possible to optimize the operation of air conditioner. Moreover, since a locking member for retaining the optionally adjusted position of motor is employed, it is possible to miniaturize the air conditioner.

## Claims

1. An expansion valve which comprises;
a main body provided with an orifice for allowing a high-pressure passageway for permitting an inflow of a refrigerant to communicate with a low-pressure passageway for permitting the outflow of the refrigerant;
a valve member for adjusting the quantity of refrigerant passing through the orifice;
an actuating rod for moving the valve member in the opening direction thereof;
a temperature sensitive driving element for driving the actuating rod; and
a pressing member for pushing the valve member in the closing direction thereof;
wherein the pushing force of the pressing member is made adjustable by means of an electric motor.

2. The expansion valve according to claim 1, wherein said main body is further provided with an additional low-temperature passageway which is exposed to a temperature sensitive element for detecting and transmitting a temperature of said additional low-temperature passageway to said temperature sensitive driving element.

3. The expansion valve according to claim 1, wherein the pressing member is constituted by a compression coil spring.

4. The expansion valve according to claim 3, wherein the pushing force by the compression coil spring is enabled to be adjusted by making use of an adjusting mechanism which is capable of changing the length of the compression coil spring, which is to be operated by means of the electric motor.

5. The expansion valve according to claim 4, wherein the adjusting mechanism is constituted by a screw mechanism which is designed to convert the rotation of the electric motor into a rectilinear movement.

6. The expansion valve according to any one of claims 1 to 5, wherein the electric motor is a step motor.

7. The expansion valve according to any one of claims 1 to 6, wherein the electric motor is fixed through a motor-mounting member to the main body, and the motor-mounting member is engaged with the main body.

8. The expansion valve according to any one of claim 7, wherein the screwed position of the motor-mounting member to the main body is retained by means of a screw position-locking member which is attached to the motor-mounting member.

9. The expansion valve according to any one of claim 7 or 8, wherein the electric motor is provided with a motor position-adjusting member, which is engaged with the motor-mounting member, and the screwed position of the motor position-adjusting member is retained by a motor position-locking member attached to the motor-mounting member.

10. The expansion valve according to any one of claim 7 or 8, wherein the electric motor is fixed to the motor-mounting member through a motor-fixing member which is adapted to be engaged with the motor-mounting member.
